(19) **Europäisches Patentamt**

**European Patent Office**

**Office européen des brevets**

(11) **EP 0 829 787 B1**

(12) **EUROPÄISCHE PATENTSCHRIFT**

(45) Veröffentlichungstag und Bekanntmachung des Hinweises auf die Patenterteilung:
**24.07.2002 Patentblatt 2002/30**

(51) Int Cl.[7]: **G05B 19/19**, B25J 9/16

(21) Anmeldenummer: **97109979.1**

(22) Anmeldetag: **19.06.1997**

(54) **Verfahren zur Positionierung von servopneumatischen Antrieben mittels adaptiver Regelung**

Process of positioning a pneumatic servo drive by adaptive control

Procédé pour le positionnement d'actionneurs servopneumatiques au moyen de régulation adaptative

(84) Benannte Vertragsstaaten:
**DE FR GB IT NL SE**

(30) Priorität: **16.08.1996 DE 19632914**

(43) Veröffentlichungstag der Anmeldung:
**18.03.1998 Patentblatt 1998/12**

(73) Patentinhaber: **FESTO AG & Co**
**73734 Esslingen (DE)**

(72) Erfinder:
• **Stoll, Kurt, Dr.**
**73732 Esslingen (DE)**
• **Kintzel, Thomas**
**73760 Ostfildern (DE)**
• **Schwarz, Michael**
**73776 Altbach (DE)**

(74) Vertreter: **Vetter, Hans, Dipl.-Phys. Dr. et al**
**Patentanwälte**
**Magenbauer, Reimold, Vetter & Abel**
**Plochinger Strasse 109**
**73730 Esslingen (DE)**

(56) Entgegenhaltungen:
**EP-A- 0 491 445**

• **H.TOLLE, J. MILITZER, E. ERSÜ: "Zur Leistungsfähigkeit lokal verallgemeinernder assoziativer Speicher und ihren Einsatzmöglichkeiten in lernenden Regelungen" MSR BERLIN 32, Nr. 3, 1989, Seiten 98-104, XP002046505**
• **DATABASE INSPEC INSTITUTE OF ELECTRICAL ENGINEERS, STEVENAGE, GB Inspec No. AN 5584922, 17.Juli 1995 FLACHS B.: "Sparse adaptive memory controllers" XP002046357**

## Beschreibung

Die Erfindung betrifft ein Verfahren zur Positionierung von servopneumatischen Antrieben mittels adaptiver Regelung, bei dem in Abhängigkeit von vorgegebenen Eingangsgrößen auf in einer Speichereinrichtung gespeicherte Werte zur Vorgabe von Regler-Parametern zugegriffen wird, daraus Ausgangsgrößen für die Regelung abgeleitet und zur geregelten Positionierung dem Regler zugeführt werden, wobei die gespeicherten Werte in Abhängigkeit des Ergebnisses des durchgeführten Positioniervorgangs adaptiert werden.

Zur Verbesserung des Positionierverhaltens servopneumatischer Antriebe wurden schon verschiedene Verfahren vorgeschlagen. Um mit einem servopneumatischen Antrieb geregelt eine frei wählbare Zielposition anzufahren, wird dem dafür eingesetzten Regler ein Satz von Regler-Parametern übergeben. Dieser Parametersatz, der für diesen einen Positioniervorgang bestimmend ist, läßt sich beispielsweise mit Hilfe von mathematischen Gleichungen, die das Gesamtsystem hinreichend genau beschreiben, vorkonfigurieren. Dieser Parametersatz führt nur für diesen einen speziellen Positioniervorgang zu dem gewünschten Ergebnis, da servopneumatische Antriebe durch starke Nicht-Linearitäten gekennzeichnet sind. Die Ursache hierfür liegt in dem nicht-linearen Verhalten von Ventilen und Zylindern, geschwindigkeits- und druckabhängiger Reibung sowie dem unterschiedlichen Verhalten von kompressiblen Medien. Um dennoch ein gutes Positionierverhalten erreichen zu können, ist es notwendig, bei der Regelung diese Eigenschaften zu berücksichtigen.

Hierzu werden beispielsweise die zu den aktuellen Eingangsgrößen gehörenden Regler-Parameter, beispielsweise durch Lösung der erwähnten mathematischen Gleichungen, ermittelt. Als Eingangsgrößen werden hier Start- und Zielposition, Masse, Druck und weitere antriebsspezifische Größen betrachtet. Für eine Verbesserung des Positionierverhaltens müssen diese Regler-Parameter ständig optimiert werden. Eine solche kontinuierliche Optimierung von Regler-Parametern bezeichnet man als Adaption. Die Kriterien für die Optimierung werden durch Bewertung eines ausgeführten Positioniervorgangs ermittelt. Die Veränderung des Regler-Parametersatzes erfolgt anhand dieser Kriterien und sollte von einem solchen System selbständig durchgeführt werden. Solche Systeme werden als selbstlernende Regler bezeichnet. Um eine Adaption verschiedener Regler-Parametersätze zu ermöglichen, müssen diese in einem Datenspeicher hinterlegt werden.

Ein bekanntes Regelkonzept dieser Art ist in einem Aufsatz von Prof. Rusterholz, 7. Aachener Fluidtechnisches Kolloquium, März 1986, Beiträge zum Fachgebiet Pneumatik Bd. 3, Seite 157- 178, vorgeschlagen. Hierbei werden die Regler-Parameter an die aktuellen Streckenparameter angepaßt, was als gesteuerte Adaption bezeichnet wird. In einem Festwertspeicher werden zu allen möglichen Kolbenpositionen die dazugehörenden Regler-Parameter gespeichert. Mit der aktuellen Kolbenposition als Eingangsgröße wird auf diesen Speicher zugegriffen, um die entsprechenden Regler-Parameter für den folgenden Regelvorgang zu erhalten. Die allgemein bekannte Abhängigkeit der Regler-Parameter von der Start- und Zielposition bei servopneumatischen Antrieben wird ebenfalls bei diesem Verfahren berücksichtigt. Zu jeder möglichen Position (Start- bzw. Zielposition) des Antriebes wird in einem Speicher ein für die Regelung maßgebender Regler-Parametersatz gespeichert, der für den Regelvorgang verwendet wird und je nach Bedarf adaptiert werden kann oder unverändert in den Speicher zurückgeschrieben wird. Die Adaption erfolgt durch Bewertung beobachteter Regelabweichungen. Die Praxis hat gezeigt, daß dieses oder ähnliche Verfahren, die nur eine Eingangsgröße (z.B. Startposition oder Zielposition) zur Ermittlung der Regler-Parameter verwenden, Nachteile aufweisen. So führen azyklische Positioniervorgänge sowie das Anfahren einer bestimmten Zielposition von unterschiedlichen Startpositionen aus zu keiner optimalen Kolbenbewegung. Dieses Problem tritt auch auf, wenn die Anzahl der Positioniervorgänge nicht bestimmbar ist, die Zielpositionen von einem übergeordneten Rechner oder einer Steuerung vorgegeben werden oder die Zielpositionen auf Grund von veränderten Umgebungsbedingungen angepaßt werden müssen. Um mit diesen Reglerkonzepten ein überschwingfreies und sicheres Positionierverhalten gewährleisten zu können, wird im allgemeinen eine sehr hohe Reglerdämpfung eingestellt, was zu sehr langen Positionierzeiten und einem ungewünschten Einfahrverhalten in die Zielposition führt.

Um diese Nachteile zu vermeiden, wird in der EP-A-0491445 oder in der DE 40 40 796 C2 ein Verfahren zur adaptiven Regelung positionierbarer Antriebe vorgeschlagen, das sowohl für zyklische als auch für azyklische Positioniervorgänge eine Reduzierung der Positionierzeiten bei überschwingfreiem Einlaufen in die Zielposition ermöglicht. Der Bewegungsbereich des Positionierantriebs wird in errechnete, durchnumerierte Strecken- oder Winkelzonen eingeteilt. Durch die Einteilung in Zonen kann eine bessere Anpassung an individuell geplante Betriebsabläufe erreicht werden. Die für einen Positioniervorgang maßgebenden Größen werden unter Berücksichtigung dieser Zonen ermittelt und in einem Datenspeicher abgelegt. Somit gewährleistet dieses Verfahren einen eindeutigen und einfachen Zusammenhang zwischen den ermittelten Zonen und den dazugehörenden Regler-Parametern beziehungsweise den ausgegebenen Stellsignalen. Das Verfahren beruht darauf, daß aus dem Zonensystem einer Eingangsgröße (z. B. Startposition) und dem Zonensystem mindestens einer weiteren Eingangsgröße (z. B. Zielposition) die Speicheradresse eines Regler-Parametersatzes berechnet wird. Der Vorteil liegt darin, daß zum einen eine verbesserte Regler-Parameteranpassung an die vorherrschenden Umgebungsverhältnisse möglich ist und zum anderen der Regler-Parametersatz nicht nur von einer, den Positionierantrieb beschreibenden Eingangsgröße abhängt, sondern daß verschiedene Kriterien zur Regler-Parameterfindung herangezogen werden. Die Einteilung in Zonen ergibt sich aus der Erfahrung, daß ähnliche Positioniervorgänge ähnliche Regler-Parameter besitzen und diese somit zusammengefaßt werden können. Eine Einteilung in Zonen wird damit begründet, daß eine schnellere Annäherung der gleitenden Integration der adaptiven Regler-Parameter an einen stabilen Mittelwert erzielt wird. Als praktisches Ausführungsbeispiel wird ein Konzept beschrieben, bei dem die Start- und Zielposition zwei Zonensysteme aus jeweils sechs Zonen bilden, die Last ein drittes Zonensystem aus zwei Zonen und der Hub ein viertes Zonensystem aus vier Zonen bilden. Der Nachteil dieses bekannten Verfahrens besteht darin, daß ein sehr großer Speicher mit sehr vielen Speicherplätzen erforderlich ist, insbesondere bei feiner Zoneneinteilung. Das Belegen dieser Speicherplätze bedeutet einen nicht unerheblichen Aufwand.

Eine Aufgabe der vorliegenden Erfindung besteht somit darin, ein Verfahren zur adaptiven Regelung servopneumatischer Antriebe der eingangs genannten Art so zu verbessern, daß ein sehr gutes Positionierverhalten bei einer wesentlich geringeren Zahl von Speicherplätzen erreicht wird.

Diese Aufgabe wird erfindungsgemäß dadurch gelöst, daß als Speichereinrichtung eine lokal verallgemeinernde, assoziative Speichereinrichtung verwendet wird, wobei der Zugriff bei jedem Positioniervorgang jeweils auf mehrere gespeicherte Situationswerte erfolgt, die ähnlichen Kombinationen von Eingangsgrößen zugeordnet sind, daß aus diesen Werten die aktuellen Regler-Parameter anhand von vorgegebenen Rechenvorschriften berechnet werden, daß nach durchgeführtem Positioniervorgang die vorgegebenen Regler-Parameter anhand charakteristischer Bewertungskriterien korrigiert und aus den korrigierten Regler-Parametern anhand der vorgegebenen Rechenvorschriften rückwärts wieder die einzelnen Situationswerte berechnet werden, die dann anstelle der bisher gespeicherten Situationswerte an den entsprechenden Speicherplätzen als korrigierte Situationswerte gespeichert werden.

Die Erfindung macht von der Erkenntnis Gebrauch, daß sich die Parametersätze benachbarter Eingangsgrößen nicht sehr stark voneinander unterscheiden. Bei stetiger Änderung der Eingangsgrößen können sich prozeßbedingt auch die Ausgangsgrößen nicht sprunghaft ändern. Die bekannten Verfahren können dies jedoch nur begrenzt berücksichtigen. Bei der bekannten Einteilung des Bewegungswegs in Zonen erfolgt keine Unterscheidung der Ausgänge für den gesamten Eingangsbereich. Hingegen wird bei dem Übergang von einer Zone in die Nachbarzone eine sprungförmige Änderung der Regler-Parameter in Kauf genommen. Erfindungsgemäß wird durch einen kontinuierlichen Verlauf der Regler-Parameter über den gesamten Eingangsgrößenbereich eine Verbesserung des Positionierverhaltens erreicht. Dazu ist es notwendig, daß die Änderung eines Regler-Parametersatzes auch benachbarte Regler-Parametersätze beeinflußt. Der Einflußbereich, also die Anzahl der mit einer Änderung betroffenen Regler-Parametersätze, ist erfindungsgemäß variabel. Das Verfahren ist in der Lage, praktisch beliebig viele Eingangsgrößen zu berücksichtigen. Zur Interpolation der Ausgangsgrößen über mehrere Eingangsgrößen wird das an sich bekannte Prinzip der verallgemeinernden, assoziativen Speicher verwendet, das beispielsweise in msr, Berlin 32 (1989) 3, "Zur Leistungsfähigkeit lokal verallgemeinernder, assoziativer Speicher und ihre Einsatzmöglichkeiten in lernenden Regelungen", H. Tolle, J. Militzer, E. Ersü, beschrieben ist. Die erfindungsgemäße Lösung besteht darin, daß durch den Einsatz von lokal verallgemeinernden, assoziativen Speichern im Bereich der Regelung servopneumatischer Antriebe eine Lösung der oben genannten Probleme erzielt wird, insbesondere eine Verbesserung des Positionierverhaltens. Die Ermittlung der zu einer bestimmten Eingangsgrößenkombination gehörenden Ausgangsgrößenkombination ist ein wesentlicher Unterschied zu den bekannten Verfahren. Eine solche Ausgangsgrößenkombination kann z. B. ein Regler-Parametersatz oder eine direkte Ausgangsgröße wie das Stellsignal für ein Proportionalventil sein. Eine Eingangsgrößenkombination (Eingangssituation) ist die Menge von Daten, die eine Ausgangssituation eindeutig definieren. Dabei handelt es sich um prozeßbeschreibende Größen, wie Ist- und Soll-Positionen, Geschwindigkeit, Masse, Differenzdruck u.dgl.

Das Ansprechen einer bestimmten Speicherzelle beziehungsweise eines bestimmten Situationswerts erfolgt erfindungsgemäß nicht wie bei den bekannten Verfahren über eine numerische Datenadresse, sondern vielmehr über eine bestimmte Situation (assoziativ = inhaltsadressiert). Die Situation besteht aus den Prozeßgrößen, die zur eindeutigen Identifikation des Prozeßzustandes notwendig sind. Der Zugriff auf den Speicher erfolgt also direkt über die Eingangsgrößen. Als Ausgang zu diesen Eingangsgrößen erhält man dann den dazugehörigen Parametersatz. Der durch Adaption korrigierte Parametersatz wird in den Speicher eingelernt. Dieser Einlernvorgang hat zur Folge, daß umliegende Parametersätze nach vorher festzulegenden Vorschriften ebenfalls korrigiert werden. Dieser Unterschied führt im Vergleich zu den bekannten Verfahren zu dem gewünschten kontinuierlichen Verlauf der Regler-Parameter und damit zu einer Verbesserung des Positionierverhaltens und zu einem schnelleren und effektiveren Selbstlern- bzw. Adaptionsverhalten.

Durch die in den Unteransprüchen aufgeführten Maßnahmen sind vorteilhafte Weiterbildungen und Verbesserungen des im Anspruch 1 angegebenen Verfahrens möglich.

Bei einer ersten vorteilhaften Ausbildung des erfindungsgemäßen Verfahrens sind die Speicherplätze in mehreren Speicherebenen angeordnet, wobei gemäß einer vorgegebenen Codierung durch jede Kombination von Eingangsgrößen ein Speicherplatz in jeder Speicherebene angesprochen wird. Die in den jeweils angesprochenen Speicherplätzen enthaltenen Situationswerte werden zur Bildung der aktuellen Regler-Parameter verwendet. Insbesondere werden Situationswerte aufaddiert, und es wird ein Mittelwert gebildet. Beim Aufaddieren oder bei der Mittelwertbildung können auch Bewertungsfunktionen für die einzelnen Situationswerte eingehen, das heißt, die Situationswerte werden mittels Bewertungsfunktionen gewichtet.

In vorteilhafter Weise besitzen die Speicherebenen eine digitale Gitterrasterung und sind gegeneinander verschoben, wobei die einzelnen Gitterelemente die Speicherplätze bilden. Ein die Speicherplätze insbesondere senkrecht schneidender Situationsvektor wählt diejenigen Speicherplätze aus, deren Situationswerte zur Bildung der aktuellen Regler-Parameter verwendet werden. Dieses spezielle Verfahren erweist sich als besonders praktikabel, da eine sehr einfache Interpolation erreicht wird, die unabhängig von der Anzahl der Eingangsgrößen ist. Weitere Vorteile liegen im stark reduzierten Speicheraufwand und dem geringen Lernaufwand. Die Anzahl der Ein- und Ausgangsgrößen kann leicht erweitert werden. Der kontinuierliche Verlauf der Ausgangsgrößen ist unabhängig von der gewählten Quantisierung.

In einer alternativen Ausgestaltung des erfindungsgemäßen Verfahrens wird verschiedenen Kombinationen von Eingangsgrößen jeweils ein Situationswert zugeordnet, und zur Berechnung der Regler-Parameter werden mehrere Situationswerte herangezogen, die der aktuellen Kombination von Eingangsgrößen am nächsten kommen. Die Situationswerte werden zweckmäßigerweise als Funktion von bestimmten Kombinationen von Eingangsgrößen listenartig abgespeichert. Nach jedem Positioniervorgang wird insbesondere der aus dem sich ergebenden korrigierten (adaptierten) Regler-Parametersatz abgeleitete Situationswert neu gespeichert.

Um mit möglichst wenig Speicherplätzen auszukommen, wird bei Belegung aller Speicherplätze derjenige Situationswert durch einen neuen Situationswert überschrieben, auf den am wenigsten oft bei zurückliegenden Positioniervorgängen zugegriffen wurde oder der den ältesten Eintrag darstellt.

Bei der Berechnung der Regler-Parameter aus den ausgewählten Situationswerten wird zweckmäßigerweise der Abstand der vorgegebenen Kombination von Eingangsgrößen zu den gespeicherten Kombinationen gewichtet. Diese Gewichtung kann nach der Methode der kleinsten Quadrate nach Gaus oder prozentual oder umgekehrt proportional oder umgekehrt quadratisch erfolgen, wobei auch noch weitere Arten der Gewichtung möglich sind.

Der Vorteil dieser zweiten Ausführung des erfindungsgemäßen Verfahrens besteht insbesondere darin, daß für nicht realisierte Eingangssituationen auch keine Situationswerte abgespeichert werden, so daß hier auch kein Speicherplatz benötigt wird. Speicherplätze werden somit nur für Eingangssituationen solcher Positioniervorgänge gespeichert, die tatsächlich realisiert werden, so daß sich insgesamt unterschiedliche Dichten von Situationswerten bilden. Da nicht für den gesamten "Eingangsraum" Speicher zur Verfügung gestellt werden muß, ergibt sich eine noch ökonomischere Ausnutzung des vorhandenen Speicherplatzes.

Ausführungsbeispiele der Erfindung sind in der Zeichnung dargestellt und in der nachfolgenden Beschreibung näher erläutert. Es zeigen:

Fig. 1    eine schematische Darstellung einer Regelvorrichtung für einen servopneumatischen Linearantrieb im Blockschaltbild,

Fig. 2    ein Strukturbild für die Informationsverarbeitung bei einem ersten Verfahren, das ein erstes Ausführungsbeispiel darstellt,

Fig. 3    eine schematische Darstellung der Rasterung von Speicherebenen,

Fig. 4    eine grafische Darstellung der beim ersten Verfahren gespeicherten Ausgangsgröße $k_1$ über den Eingangsgrößen Startposition und Zielposition,

Fig. 5    eine ähnliche grafische Darstellung für eine Ausgangsgröße $k_2$,

Fig. 6    eine entsprechende Darstellung für ein zweites Verfahren, das ein zweites Ausführungsbeispiel darstellt,

Fig. 7    eine schematische Darstellung für die Wahl eines für die Berechnung der Ausgangsfläche berücksichtigten Situationswertes und

Fig. 8    eine Funktionskurve zur Erläuterung der Gewichtung der ausgewählten Situationswerte.

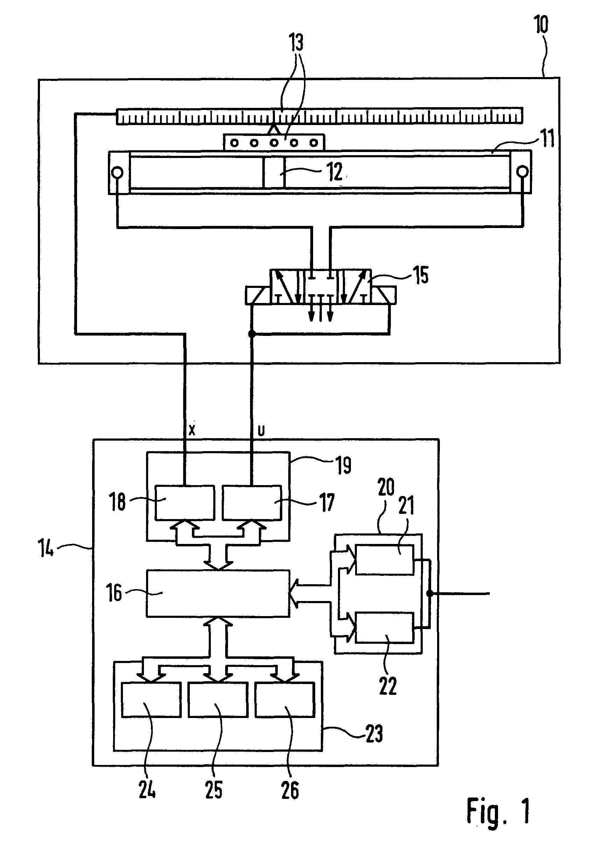

Der in Fig. 1 schematisch dargestellte servopneumatische Linearantrieb 10 besteht im wesentlichen aus einem Zylinder 11, in dem ein Kolben 12 verschiebbar angeordnet ist. Zur Erfassung der Kolbenposition dient ein Wegmeßsystem 13, für das prinzipiell ein beliebiges bekanntes Wegmeßsystem für Kolben-Zylinder-Anordnungen eingesetzt werden kann. Die Meßsignale des Wegmeßsystems 13 werden einem Regelgerät 14 zugeführt, das den Kolben 12 über ein als Stellglied dienendes Ventil 15 steuert. Hierzu können die beiden voneinander entfernten Endbereiche des Zylinders 11 mittels des Ventils 15 mit Druckluft beaufschlagt werden. Bei einem Druckunterschied bewegt sich der Kolben 12.

Das Regelgerät 14 enthält einen Mikroprozessor 16, der über einen Stellsignalausgang 17 das Ventil 15 betätigt, und der andererseits über einen Prozeßdateneingang 18 die Signale des Wegmeßsystems 13 und/oder einer anderen Istwert-Erfassungseinrichtung empfängt. Der Stellsignalausgang 17 und der Prozeßdateneingang 18 bilden eine Prozeßschnittstelle 19. Ein Benutzer kann über eine Benutzerschnittstelle 20 mit dem Mikroprozessor 16 kommunizieren. Diese enthält eine Kommando-Schnittstelle 21 und einen Programmspeicher 22. Die Kommunikation erfolgt über ein nicht dargestelltes externes Bedienfeld oder einen externen Rechner. Die Kommando-Schnittstelle 21 dient dabei als Bindeglied beispielsweise zwischen diesem externen Rechner und dem Mikroprozessor 16. Über diese Benutzerschnittstelle 20 wird dem Benutzer die Möglichkeit gegeben, die Parametrierung des Reglers einzustellen. Im Programmspeicher 22 sind die für die Ablaufsteuerung benötigten Fahrprogramme hinterlegt. Dieser Programmspeicher 22 bietet darüber hinaus noch die Möglichkeit, Programme von einer übergeordneten Steuerung zu laden.

Eine mit dem Mikroprozessor 16 ebenfalls verbundene Regler-Parametrierungseinrichtung 23 enthält die Blöcke Situationscodierung 24, lokal verallgemeinernder, assoziativer Speicher 25 und Lernmodul 26. Jeweils bei einer neuen Sollwert-Vorgabe erfolgt vor der ersten Stellwertberechnung ein einmaliger lesender Zugriff auf den lokal veralllgemeinernden, assoziativen Speicher 25, um die für die neue Positionieraufgabe notwendigen Regler-Parameter zu erhalten. Hat der Kolben 12 die vorgegebene Zielposition erreicht, so wird der Positioniervorgang vom Lernmodul 26 analysiert und bewertet. Danach werden die Regler-Parameter vom Lernmodul anhand charakteristischer Bewertungskriterien korrigiert und wieder in den Speicher 25 zurückgeschrieben. Eine wesentliche Eigenschaft des lokal verallgemeinernden, assoziativen Speichers 25 besteht darin, daß beim Zurückschreiben nicht nur die Regler-Parameter für diese eine, sondern gleichzeitig auch die für ähnliche Positionieraufgaben in ähnlicher Weise korrigiert werden. Damit erreicht man eine schnellere Anpassung des Reglers an sich ändernde Umgebungsbedingungen der Regelstrecke. Die Situationscodierung 24 hat die Aufgabe, den Datenfluß zwischen dem Mikroprozessor 16, dem lokal verallgemeinernden, assoziativen Speicher 25 und dem Lernmodul 26 zu steuern.

Im Mikroprozessor 16 läuft in üblicher Weise ein Betriebssystem, das den digitalen Regelalgorithmus, also die Regler-Software, und die durch den Anwender vorgegebene Ablaufsteuerung im digitalen Regelgerät 14 koordiniert. Dazu versorgt es den Regelalgorithmus mit dem Istwert aus dem Prozeßdateneingang 18, mit dem Sollwert aus z.B. dem Ablaufsteuerprogramm des Benutzers und mit durch den Benutzer zusätzlich vorgebbaren Daten. Der Regelalgorithmus berechnet aus diesen und den aktuellen Regler-Parametern den Stellwert, den das Betriebssystem auf dem Stellsignalausgang ausgibt. Diese Vorgänge laufen in üblicher, an sich bekannter Weise ab.

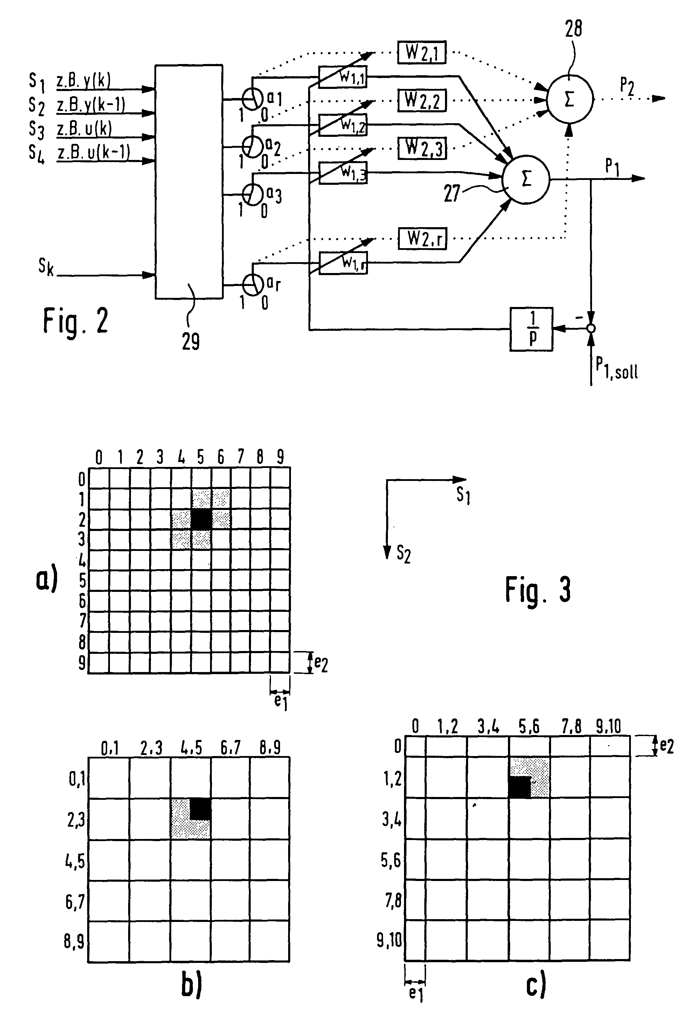

Das als erstes Ausführungsbeispiel beschriebene erste Verfahren wird im folgenden anhand der Fig. 2 bis 5 erläutert. Dieses erste Verfahren stellt eine softwaremäßige Implementierung eines lokal verallgemeinernden, assoziativen Speichers dar. Unter "assoziativ" wird im neurobiologischen Sinn die Zuordnung eines n-dimensionalen Stimulus-(Situations-)Vektors zu einem m-dimensionalen Response-(Reaktions- oder Antworts-)Vektor verstanden. Es handelt sich also um eine beliebige mathematische im allgemeinen nicht-lineare Zuordnung. Der Begriff "lokal verallgemeinernd" ordnet jedem Eingangsvektor über den gewünschten Ausgangswert (Element des Vektors) hinaus einen ganzen Ausgangswertebereich zu, was zu einer automatischen Interpolation der Ausgangswerte über dem mehrdimensionalen Eingangsraum führt. Dies reduziert den Speicher- und Lernaufwand erheblich. In Fig. 2 ist das Strukturbild für die Informationsverarbeitung des ersten Verfahrens verdeutlicht. Eine Eingangssituation ist durch $S_1$- bis $S_k$-Stimulus-Signale gegeben, wobei es sich bei diesen um die problemabhängigen Prozeßgrößen, wie Startposition, Zielposition, Masse, Geschwindigkeit u. dgl., handelt. Durch eine entsprechende Codierung werden insgesamt p von den für jeden Ausgangswert $p_i$ vorhandenen Speicherplätzen angesprochen. Diese Speicherplätze sind in p-unterschiedlichen Interpolationsebenen angeordnet. Die in den angesprochenen Speicherplätzen enthaltenen Situationswerte werden einfach aufaddiert und liefern den Ausgangswert. Beim Lernvorgang wird dieser mit dem Soll-Ausgangswert verglichen und die sich ergebende Differenz auf die p-aktiven Speicherplätze entsprechend wieder verteilt. Beim nächsten Abfragen dieser Situation wird dann genau dieser Sollwert ausgegeben. Wichtig ist die inhaltsadressierte, mehrere Speicherplätze ansprechende Codierung, deren Grundprinzip in Fig. 3 erläutert wird. Bild 3a stellt die auf Grund der digitalen Datenverarbeitung vorgegebene Rasterung für die Eingangssituation in der Dimension k = 2 ($S_1$ und $S_2$) dar. Diese feine Quantisierung und die entsprechende große Anzahl von Speicherplätzen ist bei der entsprechend geforderten Genauigkeit bei den bekannten Verfahren erforderlich. Beim Verfahren 1 wird diese feine Quantisierung ersetzt durch eine Überlagerung von p-Ebenen mit einer gröberen Quantisierung, die gegeneinander verschoben sind, wie dies in Fig. 3b und 3c dargestellt ist. Als Maß für die Verallgemeinerung wurde hier zur Vereinfachung p = 2 gewählt. Damit enthält der Speicher zwei Interpolationsebenen mit den Maschenweiten p . $e_1$ in der einen Richtung und p . $e_2$ in der anderen Richtung. Die Ebenen sind um $e_1$ in der $S_1$-Richtung und um $e_2$ in der $S_2$-Richtung gegeneinander verschoben. Die jeweiligen Situationswerte werden in jeder der gröber quantisierten Ebenen abgespeichert, und den jeweiligen Ausgangswert $p_i$ erhält man durch Aufsummierung des Inhalts der Speicherplätze der Grobgitter (Situationswerte), die durch den anliegenden Stimulus angesprochen werden.

Man erhält somit aus den Grobrastern Situationswerte, die auch für benachbarte Eingangssituationen zutreffen. Beispielsweise ist gemäß Fig. 3b der gespeicherte Situationswert, der durch die Eingangssituation 2,5 im aktuellen Fall angesprochen wird (schwarz markiertes Feld), identisch mit den Situationswerten zu den Eingangssituationen 2,4, 3,4, 3,5. Erst durch Aufsummierung der Werte aus den Grobrastern ergibt sich der wahre Ausgangswert. Durch die Verwendung der Grobraster ist aber eine Interpolation zwischen den verschiedenen Eingangssituationen möglich. Der Grad der Interpolation, also der lokalen Verallgemeinerung, hängt von der Wahl und Anzahl p der Grobgitter ab. Bei der allgemeinen Betrachtung eines n-dimensionalen Eingangsvektors s und m Ausgängen ist eine Aufspaltung in m-Hyperflächen je Ausgangselement über dem n-dimensionalen Grundgitter möglich.

Gemäß Fig. 2 werden die angesprochenen Situationswerte w an den Summierstellen 27 bzw. 28 aufsummiert, wobei zur Ermittlung der Ausgangswerte selbstverständlich auch andere mathematische Verknüpfungen gewählt werden können. Insbesondere können die Situationswerte auch noch gewichtet werden. Die Codierung zum Ansprechen mehrerer Situationswerte in Abhängigkeit jeweils einer Eingangssituation erfolgt durch eine Codiereinrichtung 29. Der benötigte Speicherbedarf errechnet sich wie folgt:

$$z = [p \cdot (R/p + 1)^n] \cdot m$$

Dabei ergibt p die Anzahl der Interpolationsebenen, R die Größe der Grundquantisierung, n die Zahl der Eingänge, m die Zahl der Ausgänge und z die Zahl der Speicherplätze.

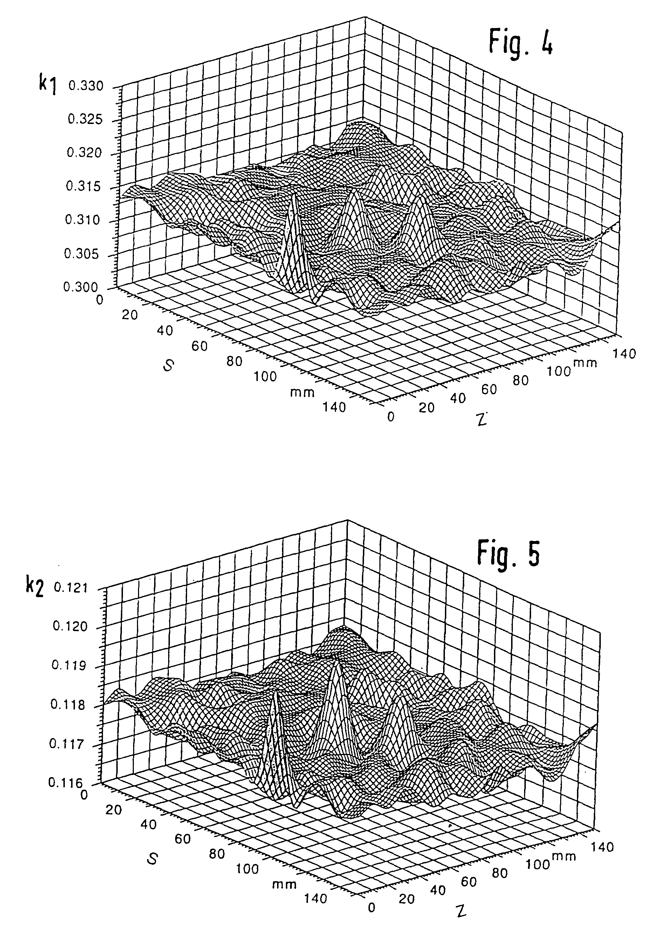

Als praktisches Beispiel des ersten Verfahrens sei eine Speicherausführung angenommen, bei der sich der Eingangsvektor aus der Start- und Zielposition zusammensetzt und bei dem ein Ausgangsvektor bestehend aus den Regler-Parametern $k_1$ und $k_2$ zugeordnet wird. Es ist aber auch denkbar, daß der Eingangsvektor aus der Masse, der Geschwindigkeit, dem Differenzdruck am Kolben, dem Hub usw. besteht und diesem ein Ausgangsvektor mit mindestens einer Größe oder beliebig vielen Werten zugeordnet wird. Bei einer Zylinderlänge von 150 mm und einer Grundquantisierung der Eingangsgrößen Start- und Zielposition in 1-mm-Schritten ergibt sich der Speicherbedarf z bei zehn Interpolationsebenen und zwei Ausgangsgrößen ($k_1$ und $k_2$) zu 5.120 Werten. Beim bekannten Verfahren gemäß der DE 40 40 796 C2 würde der Speicherbedarf 45.000 Werte betragen. Eine grafische Darstellung der gemäß dem ersten Verfahren gespeicherten Ausgangsgrößen $k_1$ und $k_2$ über den Eingangsgrößen s und z ist in den Fig. 4 und 5 dargestellt. Dabei sind die Eingangsgrößen beispielsweise die Startposition s und die Zielposition z, und die Ausgangsgrößen $k_1$ und $k_2$ können die Geschwindigkeit und die Beschleunigung sein.

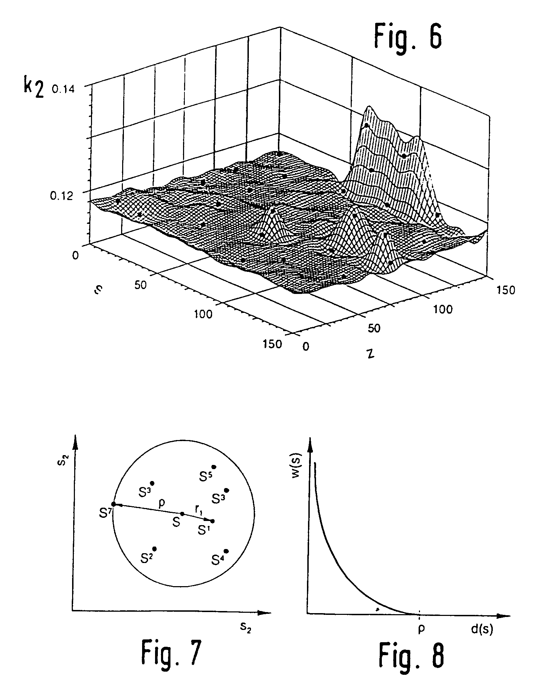

Das als zweites Ausführungsbeispiel beschriebene zweite Verfahren wird im folgenden anhand der Fig. 6 bis 8 erläutert. Dieses Verfahren basiert auf einer einfachen Liste, die aus einer Folge von Listenelementen besteht. Ein Listenelement besteht aus einer beliebigen Eingangssituation (z.B. Start- und Zielposition) mit der zugehörigen Ausgangssituation (Satz von Regler-Parametern) als Situationswert. Die Liste wird gebildet, indem jedes bei der Optimierung auftretende Eingangs-/Ausgangspaar darin abgespeichert wird. Dies kann erstmalig durch eine Vorparametrierung geschehen, die auf mathematischen oder empirischen Vorarbeiten basiert. Die Auswahl der Eingangs-/Ausgangspaar-Punkte kann zufällig verteilt werden oder dem jeweils bekannten Fahrprogramm entsprechen. Die Länge der Liste hängt vom zur Verfügung stehenden Speicherplatz ab. Keinesfalls Bestandteil dieser Liste ist der Zusammenhang der gespeicherten Eingangssituation zu dem gesamten Eingangsraum, es sei denn durch die explizite Wahl eines bestimmten Datenformats zur effektiven Ausnutzung des zur Verfügung stehenden Speichers. Es wird kein Minimum oder Maximum festgelegt und auch keine daraus abgeleitete Unterteilung eines Eingangsvektors vorgenommen.

Zur Ermittlung des gesuchten Ausgangswerts wird eine bestimmte Anzahl von Elementen der Liste so herausgesucht, daß die zur aktuellen Eingangssituation nächstliegenden Eingänge ausgewählt werden. Aus diesen Punkten wird eine Ausgangsfläche berechnet. Der gesuchte Ausgangswert ist ein Funktionswert dieser Ausgangsfläche. Durch die Wahl einer Anzahl der für die Berechnung der Ausgangsfläche berücksichtigten Punkte wird eine sich automatisch an der lokalen Punktdichte ausrichtende, gleitend veränderliche Verallgemeinerung erreicht (siehe Fig. 7).

In der Praxis wird der zur Verfügung stehende Speicherplatz begrenzt sein. Das bedeutet, daß nicht alle theoretisch möglichen Wertepaare in der Liste abgespeichert werden können. Solche abgespeicherten Wertepaare sind in Fig. 6 beispielsweise durch schwarze Punkte dargestellt.

Dies ist allerdings auch nicht nötig, da praktisch keine Anwendung den gesamten Eingangsraum anspricht. Eine Liste wird entsprechend so dimensioniert werden, daß die Anzahl der speicherbaren Wertepaare den Bedarf gut abdeckt. Für praktisch niemals angefahrene Werte werden einfach keine Wertepaare abgespeichert und damit auch kein Speicherplatz benötigt. Dies ist ein zusätzlicher Vorteil gegenüber dem ersten Verfahren oder gegenüber dem Stand der Technik. Dort muß immer über den gesamten Eingangsraum Speicher zur Verfügung gestellt werden, auch wenn Teile davon niemals benötigt werden. Wenn die Liste voll ist, müssen Einträge überschrieben werden. Die Festlegung, welche Einträge überschrieben werden, kann nach beliebigen Verfahren erfolgen. Beispielsweise werden die ältesten Einträge gelöscht oder diejenigen, auf die bisher am wenigsten oft bei zurückliegenden Positioniervorgängen zugegriffen wurde.

Ein Ausgangswert wird prinzipiell wie folgt berechnet:

Es werden die Abstände aller Punkte der Liste zu dem gewünschten Stimulus s gebildet und der Größe nach geordnet;

als Einflußgebiet für die Verallgemeinerung (Interpolation) wird eine n-dimensionale Hyperkugel gemäß Fig. 7 mit dem Radius p (s) benutzt. Zur Ermittlung des Schätzwertes des Ausgangsvektors wird eine lineare Ausgangsfläche herangezogen. Die Ausgangsfläche wird nach dem Gausschen Prinzip der kleinsten Quadrate berechnet. Die Ausgleichsfläche wird aus den benachbarten Listenelementen, die innerhalb des Radius p liegen, berechnet, um zu dem bekannten Eingangswert den bisher noch unbekannten Ausgangswert ermitteln zu können. Der Ausgangswert wird also nicht direkt aus Ausgängen der benachbarten Punkte berechnet. Durch die Optimierungsfunktion nach der Methode der kleinsten Quadrate nach Gaus werden die näher an s gelegenen Eingänge stärker gewichtet als die entfernten. Dies zeigt Fig. 8. Der neu ermittelte Wert wird in der Liste als diskretes Element abgespeichert und kann in Zukunft zur Interpolation mitverwendet werden. Eine Korrektur bzw. Adaption kann in ähnlicher Form wie beim ersten Verfahren erfolgen.

Das zweite Verfahren kann dadurch abgewandelt werden, daß die Interpolationsmethode zur Schätzung der Ausgangswerte variiert wird. Beispiele für alternative Gewichtungsfunktionen sind die prozentuale Gewichtung des Abstandes, die umgekehrt proportionale Gewichtung, die umgekehrt quadratische Gewichtung od.dgl.

**Patentansprüche**

1. Verfahren zur Positionierung von servopneumatischen Antrieben (10) mittels adaptiver Regelung, bei dem in Abhängigkeit von vorgegebenen Eingangsgrößen auf in einer Speichereinrichtung (25) gespeicherte Werte zur Vorgabe von Regler-Parametern zugegriffen wird, daraus Ausgangsgrößen für die Regelung abgeleitet und zur geregelten Positionierung dem Regler (16) zugeführt werden, wobei die gespeicherten Werte in Abhängigkeit des Ergebnisses des durchgeführten Positioniervorgangs adaptiert werden, **dadurch gekennzeichnet, daß** als Speichereinrichtung (25) eine lokal verallgemeinernde, assoziative Speichereinrichtung (25) verwendet wird, wobei der Zugriff bei jedem Positioniervorgang jeweils auf mehrere gespeicherte Situationswerte erfolgt, die ähnlichen Kombinationen von Eingangsgrößen zugeordnet sind, daß aus diesen Werten die aktuellen Regler-Parameter anhand von vorgegebenen Rechenvorschriften berechnet werden, daß nach durchgeführtem Positioniervorgang die vorgegebenen Regler-Parameter anhand charakteristischer Bewertungskriterien korrigiert und aus den korrigierten Regler-Parametern anhand der vorgegebenen Rechenvorschriften rückwärts wieder die einzelnen Situationswerte berechnet werden, die dann anstelle der bisher gespeicherten Situationswerte an den entsprechenden Speicherplätzen als korrigierte Situationswerte gespeichert werden.

2. Verfahren nach Anspruch 1, **dadurch gekennzeichnet, daß** die Speicherplätze in mehreren Speicherebenen angeordnet sind, wobei gemäß einer vorgegebenen Codierung durch jede Kombination von Eingangsgrößen ein Speicherplatz in jeder Speicherebene angesprochen wird, und daß die in den jeweils angesprochenen Speicherplätzen enthaltenen Situationswerte zur Bildung der aktuellen Regler-Parameter verwendet werden.

3. Verfahren nach Anspruch 2, **dadurch gekennzeichnet, daß** zur Bildung der aktuellen Regler-Parameter die Situationswerte aufaddiert werden oder daß ein Mittelwert gebildet wird.

4. Verfahren nach Anspruch 3, **dadurch gekennzeichnet, daß** bei der Aufaddition oder Mittelwertbildung der einzelnen Situationswerte diese mittels Bewertungsfunktionen gewichtet werden.

5. Verfahren nach einem der Ansprüche 2 bis 4, **dadurch gekennzeichnet, daß** die Speicherebenen eine digitale Gitterrasterung besitzen und gegeneinander verschoben sind, wobei die einzelnen Gitterelemente die Speicherplätze bilden, und daß ein die Speicherebenen insbesondere senkrecht schneidender Situationsvektor diejenigen Speicherplätze anwählt, deren Situationswerte zur Bildung der aktuellen Regler-Parameter verwendet werden.

6. Verfahren nach Anspruch 1, **dadurch gekennzeichnet, daß** verschiedenen Kombinationen von Eingangsgrößen jeweils ein Situationswert zugeordnet ist und daß zur Berechnung der Regler-Parameter mehrere Situationswerte herangezogen werden, die der aktuellen Kombination von Eingangsgrößen am nächsten kommen.

7. Verfahren nach Anspruch 6, **dadurch gekennzeichnet, daß** die Situationswerte als Funktion von bestimmten Kombinationen von Eingangsgrößen listenartig abgespeichert werden.

8. Verfahren nach Anspruch 6 oder 7, **dadurch gekennzeichnet, daß** nach jedem Positioniervorgang der aus dem sich ergebenden korrigierten Regler-Parametersatz abgeleitete Situationswert neu gespeichert wird.

**9.** Verfahren nach Anspruch 8, **dadurch gekennzeichnet, daß** bei Belegung aller Speicherplätze derjenige Situationswert durch einen neuen Situationswert überschrieben wird, auf den am wenigsten oft bei zurückliegenden Positioniervorgängen zugegriffen wurde oder der den ältesten Eintrag darstellt.

**10.** Verfahren nach einem der Ansprüche 7 bis 9, **dadurch gekennzeichnet, daß** bei der Berechnung der Regler-Parameter aus den ausgewählten Situationswerten der Abstand der vorgegebenen Kombination von Eingangsgrößen zu den gespeicherten Kombinationen gewichtet wird.

**11.** Verfahren nach Anspruch 10, **dadurch gekennzeichnet, daß** die Gewichtung nach der Methode der kleinsten Quadrate nach Gaus oder prozentual oder umgekehrt proportional oder umgekehrt quadratisch erfolgt.

**Claims**

**1.** Method of positioning servo-pneumatic drives (10) by means of adaptive control in which, depending on preset input values, values for presetting controller parameters stored in a memory unit (25) are accessed and used to derive output values for control, being fed to the controller (16) for controlled positioning, wherein the stored values are adapted according to the result of the implemented positioning operation, **characterized in that** a locally generalised, associative memory unit (25) is used as memory unit (25), wherein for each positioning operation access is made to several stored situation values which are assigned similar combinations of input values, that from these values the current controller parameters are calculated with the aid of preset computation rules, that following the positioning operation the preset controller parameters are updated with the aid of characteristic evaluation criteria and, from the updated controller parameters, the individual situation values are calculated back again using the preset computation rules, and are then stored as updated situation values at the relevant memory locations in place of the situation values stored previously.

**2.** Method according to claim 1, **characterized in that** the memory locations are arranged in several memory levels, wherein according to a preset coding a memory location on each memory level is addressed by each combination of input values, and that the situation values contained in the memory locations addressed in each case are used to form the current controller parameters.

**3.** Method according to claim 2, **characterized in that**, to form the current controller parameters, the situation values are added up or an average value is formed.

**4.** Method according to claim 3, **characterized in that** in adding up or averaging of the individual situation values, the latter are weighted by means of evaluation functions.

**5.** Method according to any of claims 2 to 4, **characterized in that** the memory levels have a digital grid matrix and are offset relative to one another, with the individual grid elements forming the memory locations, and that a situation vector intersecting the memory levels in particular at right-angles selects those memory locations whose situation values are to be used to form the current controller parameters.

**6.** Method according to claim 1, **characterized in that** each situation value is assigned various combinations of input values, and that several situation values which come closest to the current combination of input values are used to calculate the controller parameters.

**7.** Method according to claim 6, **characterized in that** the situation values are stored in list form as functions of specific combinations of input values.

**8.** Method according to claim 6 or 7, **characterized in that**, following each positioning operation, the situation value derived from the resulting updated controller parameter set is stored afresh.

**9.** Method according to claim 8, **characterized in that** in assigning all memory locations each situation value is overwritten by a new situation value which was accessed least often during past positioning operations or which represents the oldest entry.

**10.** Method according to any of claims 7 to 9, **characterized in that** in calculating the controller parameters from the selected situation values, the interval between the preset combination of input values and the stored combinations is weighted.

**11.** Method according to claim 10, **characterized in that** the weighting is made according to the Gaussian method of least squares, or by percentage, or inversely proportional or inversely squared.

**Revendications**

**1.** Procédé de positionnement d'actionneurs servopneumatiques (10) au moyen d'une régulation adaptative, dans lequel, en fonction de grandeurs d'entrée prédéterminées, on accède à des valeurs mémorisées dans un dispositif à mémoire (25), pour définir des paramètres de régulateur, on en dérive des grandeurs de sortie pour la régulation que l'on envoie au régulateur (16) pour le positionnement régulé, les valeurs mémorisées étant adaptées en fonction du résultat de l'opération de positionnement effectuée, **caractérisé en ce qu'**on utilise comme dispositif à mémoire (25) un dispositif à mémoire associatif de généralisation locale, l'accès concernant à chaque opération de positionnement plusieurs valeurs de situation mémorisées qui sont associées à des combinaisons similaires de grandeurs d'entrée, **en ce qu'**à partir de ces valeurs, on calcule les paramètres de régulateur actuels à l'aide de consignes de calcul prédéterminées, **en ce qu'**après exécution de l'opération de positionnement, les paramètres de régulateur prédéterminés sont corrigés à l'aide de critères d'évaluation caractéristiques et à partir des paramètres de régulateur corrigés on recalcule, à l'aide des consignes de calcul prédéterminées, les différentes valeurs de situation qui sont alors mémorisées, à la place des anciennes valeurs de situation mémorisées, aux emplacements de mémoire correspondants, en tant que valeurs de situation corrigées.

2. Procédé selon la revendication 1, **caractérisé en ce que** les emplacements de mémoire sont disposés dans plusieurs plans de mémoire, un emplacement de mémoire étant adressé dans chaque plan de mémoire selon un codage prédéterminé, par chaque combinaison de grandeurs d'entrée, et **en ce que** les valeurs de situation, contenues dans les emplacements de mémoire adressés, sont utilisées pour former les paramètres de régulateur actuels.

3. Procédé selon la revendication 2, **caractérisé en ce que** pour former les paramètres de régulateur actuels, on additionne les valeurs de situation, ou **en ce qu'**on forme une valeur moyenne.

4. Procédé selon la revendication 3, **caractérisé en ce que** pendant l'addition ou la formation de valeurs moyennes des différentes valeurs de situation, celles-ci sont pondérées au moyen de fonctions d'évaluation.

5. Procédé selon l'une des revendications 2 à 4, **caractérisé en ce que** les plans de mémoire possèdent un tramage à grille numérique et sont décalés les uns par rapport aux autres, les différents éléments de grille formant les emplacements de mémoire, et **en ce qu'**un vecteur de situation, coupant en particulier perpendiculairement les plans de mémoire, sélectionne les emplacements de mémoire dont les valeurs de situation sont utilisées pour former les paramètres de régulateur actuels.

6. Procédé selon la revendication 1, **caractérisé en ce qu'**à différentes combinaisons de grandeurs d'entrée est affectée une valeur de situation et **en ce que** pour calculer les paramètres de régulateur on a recours à plusieurs valeurs de situation qui se rapprochent le plus de la combinaison actuelle de grandeurs d'entrée.

7. Procédé selon la revendication 6, **caractérisé en ce que** les valeurs de situation sont mémorisées sous forme de listes, en tant que fonction de combinaisons déterminées de grandeurs d'entrée.

8. Procédé selon la revendication 6 ou 7, **caractérisé en ce qu'**après chaque opération de positionnement, on mémorise à nouveau la valeur de situation dérivée du jeu de paramètres de régulateur corrigé qui en résulte.

9. Procédé selon la revendication 8, **caractérisé en ce que** dans le cas où tous les emplacements de mémoire sont occupés, on remplace par une nouvelle valeur de situation, la valeur de situation à laquelle on a accédé le moins souvent au cours d'opérations de positionnement antérieures, ou qui constitue l'enregistrement le plus ancien.

10. Procédé selon l'une des revendications 7 à 9, **caractérisé en ce que** dans le calcul des paramètres de régulateur à partir des valeurs de situation sélectionnées, on pondère l'écart entre la combinaison prédéterminée de grandeurs d'entrée et les combinaisons mémorisées.

11. Procédé selon la revendication 10, **caractérisé en ce que** la pondération s'effectue suivant la méthode des plus petits carrés de Gauss ou proportionnellement ou de manière inversement proportionnelle ou de manière inversement carrée.

Fig. 1

Fig. 2

Fig. 3

Fig. 4

Fig. 5

Fig. 6

Fig. 7

Fig. 8